# EUROPEAN PATENT APPLICATION

(11) **EP 4 663 371 A1**
(43) Date of publication of application: **17.12.2025**
(21) Application number: 24709464.2
(22) Date of filing: 01.02.2024
(51) Int. Cl.: B29B 17/02, B29B 17/04, B08B 3/12, B29L 7/00, B29L 9/00, B29K 67/00, B29K 83/00

(54) **METHOD FOR SEPARATING SILICONE COATINGS FROM PLASTIC FILM**

(30) Priority: 06.02.2023 ES 202330082
(71) Applicant: CADEL RECYCLING LAB, S.L., 46893 Alfarrasi (Valencia) (ES); Kyoei Industry Co., Ltd., Oyama-shi, Tochigi 323-0027 (JP)
(72) Inventor: GARCIA VIDAL, Rafael, 46893 Alfarrasi (Valencia) (ES); COLOMO GAVILAN, Lorenzo, 46893 Alfarrasi (Valencia) (ES); GOMEZ MARTINEZ, Melania, 46893 Alfarrasi (Valencia) (ES); OVCHINNIKOV, Konstantin, 46893 Alfarrasi (Valencia) (ES); AMAT BERNABEU, Adrián, 46893 Alfarrasi (Valencia) (ES); BALTASAR JARQUE, Nuria, 46893 Alfarrasi (Valencia) (ES); ANGULO ARAMBURU, Jerónimo, 46893 Alfarrasi (Valencia) (ES); MARIN GARCIA, Maria Luisa, 46893 Alfarrasi (Valencia) (ES); BOSCA MAYANS, Francisco, 46893 Alfarrasi (Valencia) (ES); SCHMIDT, Luciana Carina, 46893 Alfarrasi (Valencia) (ES)
(74) Representative: Temiño Ceniceros, Ignacio
(86) International application number: PCT/ES2024/070055
(87) International publication number: WO 2024/165774

(57) **Abstract**

The present invention relates to a method for separating silicone coatings from plastic film comprising the steps of:
a crushing step of a material made up of plastic sheets with a silicone coating
at least one removing step of the silicone coating comprising at least one ultrasound activation with submerged sonotrodes
at least one-washing step with chemical agents of material made up of plastic wherein silicone remains dispersed on the surface are eliminated by using submerged sonotrodes a rinsing step with tap water at room temperature
a drying step.
and wherein the liquid generated at least in one of the steps of removing the silicone coating-washing with chemical agents and rinsing, go through to a water treatment step where there is a separation between the clean water and a sludge with the silicone.

## Description

### Sector of the art

The present invention relates to a method for separating silicone coatings from plastic film. In this way, each component can be recycled more efficiently. The invention belongs to the technical field of plastic recycling, and in particular relates to a method of recycling coated polyester plastic film and the like.

A recycling technology is described that consists of separating the silicone coating from the plastic film material in an aqueous medium and by activation through the use of ultrasound. Furthermore, it discloses the recovery of the water used in the process, which is treated by separating the silicone, in the form of slurry, from the clean water itself, which is introduced back into the system.

### Prior Art

The manufacture of PET with silicone coating offers great advantages over other typical materials that have been used so far, such as paper. The incorporation of silicone as a coating improves the physical properties of the film itself, giving the material greater consistency and strength, as well as tear resistance and high non-stick properties. Furthermore, they are highly resistant to ultraviolet (UV) radiation and have low water permeability.

To that end, its use is common in different industrial applications, including; the manufacture of pressure sensitive adhesives as a carrier film or release medium, such as material in digital mobile telephony, electronic screens, automotive applications, household appliances, glass manufacturing, printing, medicine and other surface protections. Generally, the silicones used as coatings can be of various types such as, for example; oil-type silicones (between 10 and 100 Da), resins (between 100-500 Da) and rubber (between 500 and 2000 Da), among others. Among the plastic supports most used for silicone coatings is mainly polyester film (PET).

During the manufacturing process of the silicone-coated film, "discards" or "waste" are generated, which must be treated for optimal recycling. The same occurs with the plastic material once it has been used for the purpose for which it was designed.

The recycling of this type of material, without previously removing the silicones, would give rise to low quality plastic materials that would be used in applications with low added value. To that end, a sustainable solution is necessary for the removal of these coatings in order to obtain silicone-free PET and thus improve its reuse.

In this sense, in the literature you can find patents and/or publications related to the removal of silicones on non-plastic surfaces, as well as processes that describe the use of ultrasound as an activating agent in cleaning inks on plastic and non-plastic media.

Application US2002/0000239A1 describes a process to remove silicone residue from ceramics or metal-electronic surfaces preferably using non-ionic surfactants as reagents and organic solvent. The use of solvents requires the implementation of infrastructures that safely store the solvents used, which increases the cost of the facilities themselves. Furthermore, it must be ensured that the waste generated is treated in a way that does not damage the ecosystem.

It is also possible to find technologies that describe the removal of inks from monolayer/multilayer materials in aqueous media, wherein the use of ultrasound has been incorporated to increase the efficiency of the process. Patent CN108501255A, CN113752430A and JPS59189946A describe the recycling of plastic materials using ultrasound in the washing step. Moreover, CN110774485A and WO2022044941A1 stand out, first describing a treatment of previously ground laminated plastic with an aqueous solution to remove the ink printed on the surface. After a washing step in water using ultrasound and drying, the different plastic sheets are obtained without ink.

In reference to the removal of inks, the test that Brio Ultrasonics published on YouTube has been found to remove paint coatings on different surfaces and where ultrasound is used an ultrasonic bath equipment in an aqueous medium to promote this separation/removal process.

In this sense, in one hand, previously cited CN110774485A discloses a method for cleaning and recycling hard plastic garbage, being this method based on a stage of superficially washing of the material to remove small particles or dust adhered to the plastic surface wherein it is used an ultrasonic bath technique, and a second stage for eliminating fatty compounds by a high-pressure cleaning. This document is silent about the problem of separating the plastic and the silicon coating and does not suggest the possibility of purifying and recycling the water used in the washing stages.

On the other hand, JPH0663942 discloses a method for removing resins from plastic surfaces, specifically polycarbonate resins from compact-disks, wherein those plastic surfaces also comprises a reflective layer of aluminium, being this methodology based in the use of ultrasonic bath equipment. This document is not directed to silicones and does not describe the possible recovery of the protective coating, and also, does not suggest the possibility of purifying and recycling the water used in this process.

In case that an expert in this field would combine those two last prior arts, a solution for the problem of separating a silicone coating from a plastic surface would not be solved since with those technologies the silicone would not be degraded and, therefore, it would not be possible to separate and would not be recovered; and, furthermore, there would be solution to the problem of treating the water used is said processes.

These methods already known in the state of the art, do not disclose how to proceed for the separation of silicone coatings from plastic surfaces, as well as for the separate recovery of plastic material and silicones. Similarly, they do not mention the method for recovering and recycling the aqueous solution used during the treatment of the sample, and they do not mention the possibility of recirculating and reusing said recycled aqueous solution. Therefore, the problem of improving the recycling of plastic film with a silicone coating remains to be solved efficiently.

The applicant does not know of a solution to these problems that is as effective as the one claimed.

### Description of the invention

The invention relates to a method for separating silicone coatings from plastic film according to the claims. Its different embodiments solve the problems of the state of the art.

Given the large amount of plastic generated worldwide, as well as the need to look for useful second lives for plastic, removing coatings deposited on the materials of this type is highly necessary. In this sense, work has been done to develop a process that makes it possible to separate the silicone coating from the film material, thus increasing the quality of the material itself, increasing the added value of the recovered product.

The method for separating silicone-coated plastic materials includes different steps such as: pretreatment, grinding, and separation of the silicone coating using ultrasound in an aqueous medium. The incorporation of ultrasound into the system will favour the reduction of cleaning agents in addition to being able to considerably shorten the residence times of the process, depending on the purity of the material to be recovered. It reduces foam formation, and therefore, fewer defoamers can be used or even avoided. This reduces the high costs caused by the significant consumption of antifoaming agents, as well as the cost associated with water treatment.

The method includes an environmentally sustainable system through the recycling of the water used in the process. Through this technology, water treatment is carried out, recirculating clean water back into the system and recovering the silicone released in the form of slurry, which can be treated for later use in other industrial applications. Therefore, the present invention provides the advantage of separating and purifying the water used throughout the previous steps of the process, reducing the required water consumption.

Furthermore, by separating the silicones from the solution, they can be recovered and reused in other applications, as shown in patent US9751899B2, considerably reducing the waste generated in the process to a minimum.

The method developed in the present invention is capable of being used both in the product being recycled (which has already been used for the purpose for which it was created) as well as material that has had to be "discarded" or "waste" or cuts generated during the manufacturing process of the plastic coating.

In this sense, the present invention develops an innovative technology in which it removes silicone coatings from a plastic film material, using sonication as an aqueous-based activation method. The type of silicone can be: gaseous (less than 10 Da); oils (between 10 and 100 Da); resins (between 100-500 Da) and/or rubber (between 500 and 2000 Da). It is especially interesting for resins.

Specifically, the method for separating silicone coatings from plastic film comprises the steps of:
a crushing step of a material made up of plastic sheets with a silicone coating;
at least one removing step of the silicone coating from the plastic in one or more tanks with an aqueous solution at 20-100 °C and mechanical stirring comprising at least one ultrasound activation with submerged sonotrodes with a frequency between 15-100 kHz for at least 10 minutes and with at least one separation of silicone solids;
at least one washing step with chemical agents of material made up of plastic wherein silicone remains dispersed on the surface are eliminated by using submerged sonotrodes with a frequency and amplitude similar to the previous step;
a rinsing step with tap or washing water at room temperature
a drying setp;
and wherein the liquid generated in the steps of removing the silicone coating and/or washing with chemical agents go through a water treatment where there is a separation between the clean water and a sludge with the silicone, and a recovery of the silicones; and wherein it can be a recirculation of the clean water back to those previous steps.

In a possible embodiment of the invention, the liquid generated in the rinsing step can also go through a water treatment, wherein there is a separation of the clean water; and wherein it can be a recirculation of the clean water back to any the removing, washing or rising steps.

Ultrasounds generated by submerged sonotrodes are emitted at 15-100 kHz, preferable between 15-25 kHz, with a specific contribution of 3-200 J/ml of solution. The amplitude is 12-42 micrometres.

In this sense, the present invention, compared to others known in the state of the art, is based on the essential use of submerged sonotrode(s) which generate(s) ultrasonic waves that produce focused microscopic bubbles that implode (cavitation phenomena) to perform ultrasonic cleaning, instead of prior art techniques using an ultrasonic bath that generates ultrasonic waves from the reactor walls towards the centre. In the present invention, the use of submerged sonotrodes is essential and it is not possible to carry out the process using an ultrasonic bath.

Drying step may comprise mechanical and hot airflow drying.

Other variants are set forth in the independent claims and are described below.

Taking into account what was previously indicated, the system used in the development of aforementioned method comprises:
a blade crusher or blade grinder, which may comprise moving blades and fixed blades and a series of screens for selecting the dimensions of the particles;
at least one tank with aqueous solution at a temperature of 20-100°C; comprising blade or propeller agitators and submerged sonotrodes;
at least one washing tank with chemical agents
a rinse tank with water at room temperature
a drying equipment with a centrifuge or other mechanical separation system and hot air drying or similar; and
at least one water treatment equipment or deposit comprising means for separating the silicone sludge and recovering recyclable water.

To end, it must be taken into account that, throughout the description and claims, the term "comprises" and its variants are not intended to exclude or limit other technical features or additional elements.

### Brief description of the drawings

To complement the description that will be made below and in order to help a better understanding of the features of the invention, according to a preferred practical embodiment thereof, a drawing is attached as an integral part of said description wherein the following has been depicted with an illustrative and non-limiting character:

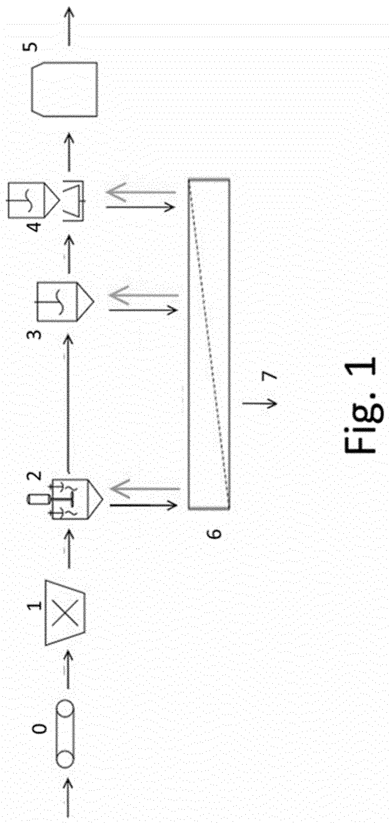

Fig. 1: Diagram of an exemplary embodiment of the described method, together with the equipment involved therein.

### Detailed description of a preferred embodiment of the invention

Several embodiments of the invention are briefly described below as an illustrative and non-limiting example thereof.

The method of this embodiment is based on a material made up of plastic sheets with a silicone coating. The input material can be polyester film (PET), polyethylene (PE), polypropylene (PP) or polyamide (PA). If this material comes from a discard, it may arrive on a mandrel. In this case, the preliminary step (0) is the removal of the plastic from the mandrel and the removal of improper material or foreign objects (for example, using magnets to remove the ferromagnetic material, or by washing to remove dust and other similar contamination). Otherwise, it moves directly to the first stage, corresponding to a grinding or crushing step (1). In the same manner, if the material already comes in a reduced size, this first stage can be eliminated.

The crushing step (1) of the example is carried out with a blade grinder, achieving a ground material with dimensions of 2-10 cm, preferably 4-6 cm. The blade grinder has mobile blades and fixed blades and a series of screens for selecting particle dimensions.

The next step is the removal of the silicone coating (2) or cleaning to recover the rest of the material, usually PET plastic. The removal of the coating (2) occurs in one or more tanks with an aqueous solution at a temperature of 20-100 °C, comprising at least one ultrasound activation with submerged sonotrodes with a frequency between 15-100 kHz for at least 10 minutes and with at least one separation of silicone solids. In the present example of embodiment there is a first ultrasound activation with submerged sonotrodes with a frequency between 15-100 kHz for at least 10 minutes and a first separation of silicone solids; followed of a second a first ultrasound activation with submerged sonotrodes with a frequency between 15-100 kHz for at least 10 minutes and a second separation of silicone solids. In the washing tank with chemical agents, mechanical agitation is performed using blade or propeller stirrers and ultrasonic activation using submerged sonotrodes. This washing step with chemical agents is based on an aqueous solution may contain surfactants in a concentration comprised between 0.1 and 50g/l, preferably 0.1-2 g/l to improve the economy of the process, reducing antifoaming agent consumption, although it is possible to achieve efficiencies above the 80%. The agents can be surfactants with a structure of quaternary ammonium salts, ethers, aromatic and/or alkyl chain sulfonates composed of carbon chains formed by C4-C24. The pH depends on the type of material, the preferred ranges being between 1-5 or 8-14. For example, antifoaming agents can be a mixture of derivatives of polydimethylsiloxanes and other silicones.

The plastic material is washed (3) with chemical agents, and then are rinsed (4) and dried (5) in the related steps.

The liquid generated from tanks of removal of the silicone coating (2) step and/or the washing step (3) are diverted to a water treatment (6) step with recovery of the silicones (7) in slurry.

The washing (3) with chemical agents of the material in water remove any silicone remains dispersed on the surface and/or residual traces that it may contain, it also being possible, by way of example, to apply sonotrodes with frequency and amplitude similar to the previous stages. The washing preferably taken to water treatment tank to water treatment (6) step with the.

The washing (3) can be carried out in the same tanks where the cleaning or removal of the coating (2) took place.
washing step (3) is carried out several times, in one or more consecutive tanks, until the plastic film has been completely washed. It is subsequently rinsed with water at room temperature and dried, initially in a drying equipment with a centrifuge or other mechanical separation system and then hot air drying or similar. This allows us to achieve a material ready to be reused with a reduced percentage of humidity. For example, it can be melted for pelletisation.

It can be understood that water at room temperature refers to clean water at a temperature preferably between 20°C and 25°C.
In addition, in this embodiment the liquid generated in the rinsing goes through a water treatment step.

The water treatment (6) step separates clean water (90-99% purity) and a slurry with the silicone. The clean water can be recycled or taken to the washing (3), coating removal (2) or rising (3) setp's tanks as it can be required by the system, so this recirculation has the advantage of optimizing water consumption. In addition, the equipment or deposit of the water treatment comprise means to separate the silicone slurry or sludge by evaporation-condensation or by other techniques to recover recyclable water such as membrane filtration, evaporation, decantation (without flocculation), decantation with flocculation or by a combination of these techniques.

The slurry is taken to recover the silicones (7) step, which can be performed in several ways. For example, converting them to alkoxysilanes as described in US9751899B2.

It is considered that the invention is applicable to working conditions such as plastic concentration at coating removal step (2) is 1-200 g/l, and surfactants in a concentration comprised between 0.1 and 50 g/l at a temperature of 40-100 °C and with a hydraulic retention time (HRT) of 10-60 minutes.

In this way, tests have been carried out, wherein 3000 Kg of plastic material to be treated are processed, and where there is an output of clean plastic material of 2526 Kg, with a total loss of plastic and silicone sludge of 348 Kg, of which it is possible to dry a total of 268 kg of plastic and obtain 80 kg of silicone sludge that is subsequently treated. The result is that there is a silicone removal rate of 82%.

## Claims

1. A method for separating silicone coatings from plastic film, comprising the steps of:
a crushing step (1) of a material made up of plastic sheets with a silicone coating;
at least one removing step (2) of the silicone coating from the plastic in one or more tanks with an aqueous solution at 20-100 °C and mechanical stirring, this step comprising at least one ultrasound activation with submerged sonotrodes with a frequency between 15-100 kHz for at least 10 minutes and with at least one separation of silicone solids;
at least one washing step (3) with chemical agents of material made up of plastic wherein silicone remains dispersed on the surface are eliminated by using submerged sonotrodes with a frequency similar to the previous step;
a rinsing step (4) with tap or washing water at room temperature;
a drying step (5);
and wherein the liquid generated at least in one of the steps of removing the silicone coating (2) and washing with chemical agents (3) go through to a water treatment step (6) where there is a separation between the clean water and a sludge with the silicone, and then to a recovery of the silicones step (7).

2. The method for separating silicone coatings from plastic film, according to claim 1, **characterised in** the washing step (3) with chemical agents the aqueous solution has surfactants in a concentration comprised between 0.1 and 50 g/l.

3. The method for separating silicone coatings from plastic film, according to claim 2, **characterised in that** the chemicals are surfactants with a structure of quaternary ammonium salts, ethers, aromatic and/or alkyl chain sulfonates composed of carbon chains formed by C4-C24.

4. The method for separating silicone coatings from plastic film, according to claim 1, **characterised in that** in the washing step (3) with chemical agents the aqueous solution has surfactant in a proportion of 0.1-2 g/l.

5. The method for separating silicone coatings from plastic film, according to claim 1, **characterised in that** the drying step (4) comprises mechanical and hot airflow drying.

6. The method for separating silicone coatings from plastic film, according to claim 1, **characterised in that** it comprises a preliminary phase of removing improper material step (0).

7. The method for separating silicone coatings from plastic film, according to claim 1, **characterised in that** the material in the coating (2) removal tank has dimensions of 2-10cm.

8. The method for separating silicone coatings from plastic film, according to claim 1, wherein the clean water separated from the water treatment stage (6) is recirculated back to the removing step (2).

9. The method for separating silicone coatings from plastic film, according to claim 1, wherein the clean water separated from the water treatment stage (6) is recirculated back to the washing step (3).

10. The method for separating silicone coatings from plastic film, according to claim 1, wherein the liquid generated in the rinsing step (4) go through to the water treatment step (6) wherein there is a separation of the clean water, and then is recirculated back to any of the removing step (2), washing step (3) or rising step (4)

11. A system for separating silicone coatings from plastic film for carry out a method according any of the claims 1 - 10, **characterized in that** it comprises:
a blade crusher or blade grinder, which may comprise moving blades and fixed blades and a series of screens for selecting the dimensions of the particles;
at least one tank with aqueous solution at a temperature of 20-100°C; comprising blade or propeller agitators and submerged sonotrodes;
at least one washing tank with chemical agents;
a rinse tank with water at room temperature
a drying equipment with a centrifuge or other mechanical separation system and hot air drying or similar; and
at least one water treatment equipment or deposit comprising means for separating the silicone sludge and recovering recyclable water.

12. The system, according to claim 11, wherein the blade crusher comprises mobile blades and fixed blades, and a series of screens to select the dimensions of the particles.

13. The system, according to claim 11, wherein the mechanical separation system of the drying equipment comprises a centrifuge.

14. The system, according to claim 11, wherein the water treatment equipment or deposit comprise means for separating the silicone sludge by evaporation.

15. The system, according to claim 11, wherein the water treatment equipment or deposit comprise recyclable water recovery means such as membrane filtration, evaporation, decantation, decantation with flocculation or a combination of those techniques.
